# EUROPÄISCHE PATENTSCHRIFT

(11) **EP 1 646 501 B1**
(45) Veröffentlichungstag und Bekanntmachung des Hinweises auf die Patenterteilung: **13.04.2016**
(21) Anmeldenummer: 04740725.9
(22) Anmeldetag: 07.07.2004
(51) Int. Cl.: B32B 27/08, B65D 81/34, A22C 13/00

(54) **RAUCH- UND WASSERDAMPFDURCHLÄSSIGE NAHRUNGSMITTELHÄLLE MIT AROMATISIERTER INNENFLÄCHE**
SMOKE AND STEAM-PERMEABLE FOOD CASING COMPRISING A FLAVORED INTERIOR SURFACE
ENVELOPPE ALIMENTAIRE PERMEABLE A LA FUMEE ET A LA VAPEUR D'EAU, PRESENTANT UNE SURFACE INTERIEURE AROMATISEE

(30) Priorität: 07.07.2003 DE 10330762
(43) Veröffentlichungstag der Anmeldung: 19.04.2006
(73) Patentinhaber: Kalle GmbH, 65203 Wiesbaden (DE)
(72) Erfinder: WILFER, Robert, 33775 Versmold (DE); DELIUS, Ulrich, 60529 Frankfurt (DE); BECKER, Jörg, 24211 Preetz (DE); SCHETTER, Günther, 65191 Wiesbaden (DE); KÖNIG, Martina, 65207 Wiesbaden (DE); KIENE, Gabriele, 55578 Gau-Weinheim (DE); SCHULZ, Cathrin, 65474 Bischofsheim (DE); AUF DER HEIDE, Dirk, 45954 Alfhausen (DE); AUF DER HEIDE, Christian, 49080 Osnabrück (DE)
(74) Vertreter: Plate, Jürgen
(86) Internationale Anmeldenummer: PCT/EP2004/007408
(87) Internationale Veröffentlichungsnummer: WO 2005/002848

(56) Entgegenhaltungen:
- EP-A- 0 473 091
- EP-A- 1 125 504
- WO-A-97/36798
- US-A- 4 442 868
- US-A1- 2003 059 502

## Beschreibung

Die vorliegende Erfindung betrifft eine rauch- und wasserdampfdurchlässige Nahrungsmittelhülle auf Basis von aliphatischem Polyamid und/oder aliphatischem Copolyamid.

Bei der industriellen und handwerklichen Herstellung von kalt, warm oder heiß geräucherten Roh-, Brüh- und Kochwürsten sowie Schmelz- und Frischkäsen haben sich Cellulosehüllen, Cellulosefaserhüllen und Collagenhüllen sowie ein- oder mehrschichtige, wasserdampfdurchlässige Kunststoffhüllen auf Basis von Polyamid und in Verbindung mit anderen Kunststoffen bewährt.

Insbesondere bei Rohwürsten ist man auf die Verwendung von wasserdampfdurchlässigen Hüllen angewiesen, um bei der Reifung zur Absenkung des Gehaltes an freiem Wasser in der Wurstmasse einen Abtrocknungsprozeß zu ermöglichen. Der Wasserverlust kann 0,5% bis 50 %, bezogen auf das Anfangsgewicht der Wurst, betragen. Bei der Salamireifung ist beispielsweise ein Gewichtsverlust von etwa 23 bis 26 % nach 10 Reifetagen üblich, was hochpermeable Hüllen voraussetzt. Weiterhin lassen herkömmliche Kunststoffhüllen keinen Kaltrauch (dieser hat eine Temperatur von etwa 20 bis 35 °C) und nur geringe Mengen Heißrauch (ca. 70 bis 80 °C) durch. Die Kalträucherung ist bei Rohwurstsorten jedoch ein Standardverfahren. Der Räucherungsprozeß kann sich je nach Verfahren von 20 min bis zu mehreren Tagen hinziehen.

Beim Räuchern wird entweder der innerhalb einer geschlossenen Kammer (Rauchkammer) erzeugte oder in diese Kammer eingeleitete Rauch zu der hängenden Wurst bzw. zirkulierend über das Räuchergut gebracht. Alternativ dazu kann eine Flüssigrauchlösung innerhalb der Kammer vernebelt werden.

Um ein gleichmäßig gutes Räucherergebnis zu erreichen, müssen die Würste aufgehängt werden, damit sie von allen Seiten dem Rauch zugänglich sind. Um eine gleichmäßige Rauchfarbe und Raucharoma zu erhalten, dürfen sich die Würste nicht berühren und können auch nicht liegend geräuchert werden. Typisch dabei ist, daß Würste bzw. Wurstketten auf sogenannten Rauchstöcken hängend in fahrbaren Gestellen in die Räucherkammern verbracht werden. Die Wurst hängt dabei an einer eigens im Verschlußclip angebrachten Halteschlaufe.

Das Aufhängen auf die Rauchstöcke erfolgt von Hand oder maschinell. Die Rauchstöcke selbst können nur manuell in den Rauchwagen eingehängtwerden. Nach dem Räucherprozeßwird die Wurst von anhaftenden Rußpartikeln gereinigt und getrocknet. Durch hohen Trocknungsschrumpf kann jedoch Öl am Clip austreten, so daß die Wurst mit einem Fettfilm überzogen ist. Dies wird von der fleischverarbeitenden Industrie seit langem als Nachteil und hygienisches Risiko betrachtet.

Nach der Trocknungsphase werden die Rauchstöcke aus dem Rauchwagen genommen, und die Wurst wird von den Rauchstöcken abgestreift. Die Wurstketten werden zu einzelnen Würsten zerschnitten und danach verpackt, wobei die Hängeschlaufe vor der Verpackung entfernt werden muß.

Das Räuchern ist allgemein sehr arbeitsintensiv und verteuert die Herstellungskosten. Der Betrieb von Räucherkammern unterliegt der gesetzlichen Aufsicht mit Schwerpunkt auf Emmisionsschutz sowie Brandschutz. Räucherkammern und die zum Räuchern verwendeten Werkzeuge (Rauchwagen und Rauchstöcke) müssen unter Einsatz von chemischen Reinigungsmitteln regelmäßig unter hohem Arbeitsaufwand und hohem Personaleinsatz gereinigt und instandgehalten werden. Alternativen zur Vereinfachung des Räucherprozesses unter Verzicht auf Räucherkammern werden immer noch gesucht.

Zum Übertrag von Rauchgeschmack und -geruch auf Wurstwaren gibt es neben den Verfahren der traditionellen Räucherung und der Räucherung mit Hilfe von Flüssigrauch die Möglichkeit, Wursthüllen direkt mit Flüssigrauch zu imprägnieren. Im Stand der Technik sind alternativ rauch- undwasserdampfdurchlässige Polymerhüllen beschrieben, die räucherbar sind, oder rauch- und wasserdampfundurchlässige Polymerhüllen, die mit Flüssigrauch imprägniert werden können.

Hüllen für ungeräucherte Wurstwaren werden heute in großem Umfang aus thermoplastischen Kunststoffen hergestellt. Übliche Kunststoffe sind Polyamide, Polyester und Vinylchlorid-Copolymere. Die Hüllen können ein- oder mehrschichtig hergestellt werden. In den mehrschichtigen Hüllen sind häufig noch Schichten aus Polyolefin vorhanden. Der entscheidende Vorteil dieser Hüllen liegt in der technisch relativ einfachen und kostengünstigen Herstellung. Hüllen aus thermoplastischem Kunststoff haben in der Regel eine Wasserdampfdurchlässigkeit (WDD) von etwa 3 bis 20 g/m² · d. Wurstwaren in einer solchen Hülle verlieren bei der Lagerung deutlich weniger an Gewicht. Derartige Hüllen, etwa aus Polyamid, sind in der Regel nicht rauchdurchlässig und können daher nicht für die Herstellung von Wurstsorten eingesetzt werden, die geräuchert werden.

Es ist weiterhin bekannt, schlauchförmige Nahrungsmittelhüllen, speziell Wursthüllen, auf der Außen- oder Innenseite mit Flüssigrauch zu beschichten bzw zu imprägnieren. Beschichtungen auf der Außenseite lassen sich verfahrenstechnisch einfacher durchführen. Die Bestandteile des Flüssigrauchs müssen dann jedoch durch die Hülle hindurchwandern, um dem Brät die typische Farbe, das Aroma und den Geschmack von Geräuchertem zu verleihen. Vielfach beschrieben sind von außen mit Flüssigrauch imprägnierte Cellulosehüllen. Hüllen aus anderem Material sind dafür häufig nicht durchlässig genug. Das gilt für einschichtige, ganz besonders aber für mehrschichtige Kunststoffhüllen. Diese können allenfalls auf der Innenseite mit Flüssigrauch behandelt werden, was jedoch regelmäßig daran scheitert, daß der Flüssigrauch nicht ausreichend haftet und zu Tropfen zusammenläuft, bevor er angetrocknet ist. Ein Ansatz zur Lösung dieses Problems ist in der DE-A 196 08 001 beschrieben. Er besteht darin, den Flüssigrauch auf eine entsprechend zugeschnittene Flachfolie aufzubringen, die dann so zu einem Schlauch geformt wird, daß die mit Flüssigrauch beschichtete Seite nach innen weist. Anschließend wird der Schlauch durch Heißsiegeln dauerhaft geschlossen, wodurch er eine Lahgshaht erhält. Das Aufbringen des Flüssigrauchs und das Herstellen des Schlauchs erfolgen praktisch unmittelbar vor dem Befüllen mit Wurstbrät. Ein Raffen des gesiegelten Schlauchs entfällt damit. Das Verfahren erfordert jedoch technisch aufwendige und entsprechend teure Vorrichtungen.

In der WO 97/36798 ist eine heißschrumpfende, flächige oder schlauchförmige Nahrungsmittelhülle beschrieben, die innen eine Schicht aus einem Copolymer und einem Lebensmittelzusatzstoff enthält. Das Copolymer enthält praktisch wasserunlösliche und hygroskopische Segmente. Als Lebensmittelzusatzstoff ist auch Flüssigrauch offenbart, der von der Hülle auf deren Inhalt übertragen wird. Als Problem hat sich jedoch erwiesen, daß die Innenseiten miteinander verkleben. Das ist besonders dann der Fall, wenn die Hülle in aufgerollter oder aufgestockter Form für längere Zeit gelagert wird.

Eine ganz ähnliche Schrumpffolie ist auch in der WO 98/31731 offenbart. Hier besteht die Innenbeschichtung aus einem Gemisch mit (i) einem Additiv, bei dem es sich um einen Aromastoff, einen Geruchsstoff, einen Farbstoff, ein antimikrobielles Mittel, einen Chelatbildner und/oder ein geruchsabsorbierendes Mittel handelt, (ii) einem Polysaccharid oder Protein als Bindemittel und (iii) einem Vernetzer, der mindestens zwei Carbonylgruppen aufweist. Das Additiv kann u.a. Flüssigrauch sein. Innenbeschichtete Schlauchfolien werden dabei aus den entsprechenden Flachfolien hergestellt. Die Beschichtung selbst erfolgt mit einer Walze. Dabei werden die Ränder nicht beschichtet. Die Flachfolie wird dann zu einem Schlauch geformt und die übereinander gelegten Ränder der Folie durch Heißsiegeln fest verbunden. Die so erhaltene Hülle wird gerafft und an einem Ende mit einem Clip verschlossen. Anschließend wird die Hülle mit einem Fleischprodukt gefüllt und erhitzt. Dabei wird das in der Innenschicht der Hülle vorhandene Additiv auf das Fleischprodukt übertragen. Allerdings verkleben die Innenseiten der Hülle nach dem Raffen häufig miteinander, so daß beim Entraffen die Innenschicht beschädigt wird.

In der JP-A 139401/2000 ist eine Folie beschrieben, mit der sich eine Nahrungsmittelfarbe auf Wurstbrät, Schinken oder ähnliche Lebensmittel übertragen läßt.

Erreicht wird das mit einer Beschichtung, die neben dem Lebensmittelfarbstoff noch einen eßbaren Weichmacher, wie Glycerin, Sorbit oder Propylenglykol enthält.

In der EP-A 139 888 ist ein Verfahren zum Räuchern von Lebensmitteln in einer Hülle aus aliphatischem Polyamid offenbart. Das Polyamid nimmt mindestens 3 Gew.-%, bevorzugt mindestens 5 Gew.-% an Wasser auf. Geräuchert wird daher in Gegenwart von Wasser oder Wasserdampf, was eine klimageregelte Räucherkammer erfordert.

Gegenstand der DE-A 198 46 305 ist eine Barrierehülle aus einem Kunststoffmaterial, die auf der Innenseite eine Lage aus einem saugfähigen Material (Gewebe, Gewirke oder Gestricke) aufweist, das mit Farb- oder Aromastoffen getränkt ist. Beim Kochen oder Brühen werden die Farb- oder Aromastoffe auf das von der Hülle umschlossene Lebensmittel übertragen. Die Verbindung der Innenlage mit der benachbarten Lage der Hülle erfolgt allgemein durch einen Kleber. Die Barrierehülle selbst besteht beispielsweise aus Polyamid- und Polyethylenschichten. Schlauchförmige Hüllen werden allgemein aus entsprechenden Flachfolien durch Heißsiegeln oder Kleben hergestellt. Im Bereich der Siegelnaht wird der Farb- oder Aromastoff oftmals ungleichmäßig übertragen. Auch zeigen gesiegelte oder geklebte Hüllen häufig einen ungleichmäßigen Schrumpf. Dann zeigt sich nach dem Brühen oder Kochen der Wurst in den Nahtbereichen ein unerwünschter Geleeabsatz zwischen Hülle und Wurstbrät.

Aus der EP-A 0 473 091 ist eine ein- oder mehrschichtige Nahrungsmittelhülle bekannt, die eine Mischung aus einem thermoplastischen Polymer und einem Olefinoxid-Polymer mit einem Molekulargewicht von mindestens 70.000 umfaßt. Als Olefinoxid-Polymer wird insbesondere ein Poly(ethylenoxid) eingesetzt. Die Hülle enthält ein Mittel, das auf ein in der Hülle befindliches Nahrungsmittel übertragbar ist. Konkret erwähnt ist Flüssigrauch. Das thermoplastische Polymer kann aus einer Vielzahl von Polymeren ausgewählt sein.

US-A 4 442 868 offenbart eine Nahrungsmittelhülle, die mit einer wäßrigalkalischen Farb-oderGewürzlösung, insbesondere miteinerwäßrig-alkalischen Flüssigrauchlösung, imprägniert ist. Die Hülle selbst ist vorzugsweise ein Cellulosedarm oder ein Cellulose-Faserdarm. Polyamid (Nylon) wird als Material für die Hülle in Erwägung gezogen.

EP-A 1 125 504 betrifft eine schlauchförmige Nahrungsmittelhülle, die auf einer Oberfläche eine kontinuierliche, bei Normaldruck und-temperatur feste Schicht aufweist. Diese Schicht ist hergestellt aus einem Gemisch mit einem unter diesen Bedingungen festen Wachs und/oder einerwachsähnlichen Komponente, einem Flüssigrauch und einem Emulgator, der das Gemisch in einer stabilen Wasser-in-Öl-Emulsion hält. Diese spezielle Beschichtung ist vorgesehen für Kunststoffhüllen, die undurchlässig für Rauch und Wasserdampf sind. Dabei wird die Beschichtung auf die Außenseite aufgetragen und die Hülle dann gewendet.

Eine auf der Innenseite mit einer Mischung aus Flüssigrauch und einem Bräunungsmittel imprägnierte mehrschichtige Kunststoffhülle ist in der DE-A 101 24 581 beschrieben. Sie umfaßt jeweils eine Schicht auf Basis von aliphatischem Polyamid auf der Innen- und Außenseite sowie eine zentrale wasserdampfsperrende, gegebenenfalls auch sauerstoffsperrende Schicht. Diese mittlere Barriereschicht besteht beispielsweise aus Polyethylen oder Ethylen/ Vinylalkohol-Copolymer. Die Flüssigrauchmischung soll mindestens 5 Tage lang auf die Innenseite einwirken, bevor die Hülle gewässert und gefüllt wird.

In der US 2003/0059502 A1 sind Cellulose-Faserdärme und schlauchförmige Polymerhüllen für Nahrungsmittel offenbart, die innen imprägniert sind mit einer Mischung aus Flüssigrauch, Bräunungsmittel und gegebenenfalls Wasser. Die Mischung soll mindestens 5 Tage lang auf die Innenseite der Faserdärme bzw. Polymerhüllen einwirken. Die Polymerhüllen sind allgemein 3-schichtig mit einer Polyamid schicht auf der Innen- und Außenseite und einer zentralen Polyethylen- oder Polyvinylalkohol-Schicht.

Alle bekannten Hüllen mit einer Innenlage oder Innenbeschichtung, die einen übertragbaren Nahrungsmittelzusatzstoff enthält, haben den Nachteil, daß sich die Haftung der Schicht nicht in der gewünschten Weise einstellen läßt. Die Folge einer zu geringen Haftung ist, daß die Wurst zur Geleebildung neigt und daß die Beschichtung beim Konfektionieren (bei Schlauchfolien üblicherweise durch Raffen und/oder Wenden) Risse zeigt oder gar abplatzt. Die Hülle ist dann nicht mehr verwendbar. Bei einer zu starken Haftung werden Farb-, Aroma- oder Geschmacksstoffe nicht in ausreichendem Maße auf das Lebensmittel übertragen.

Eine räucherbare Folie zur Verpackung von Lebensmitteln ist in der EP-A 217 069 beschrieben. Sie umfaßt mindestens eine Schicht, die aus einem Gemisch von Polyamid, einem Ethylen/Vinylalkohol-Copolymer(EVOH) und Polyolefin besteht, wobei die Bestandteile der Schicht in einem bestimmten Gewichtsverhältnis stehen. Die Schicht hat eine Wasserdampfdurchlässigkeit von weniger als 40 g/m² · d bei einer Temperatur von 40 °C und einer relativen Luftfeuchte von 90 %. Unter üblichen Bedingungen ist damit kein zufriedenstellender Rauchdurchgang zu erwarten.

Eine wasserdampf- und rauchdurchlässige Nahrungsmittelhülle auf Basis von Polyamid ist auch in der WO 02/078455 offenbart. Die Hülle besteht aus einer Matrix aus aliphatischem Polyamid oder aliphatischem Copolyamid und einer dispersen Phase aus einer nieder- oder hochmolekularen hydrophilen Komponente, wie Polyvinylpyrrolidon, Polyacrylamid.

Es bestand daher die Aufgabe, eine füllfertig geraffte Nahrungsmittelhülle aus einem thermoplastischen Gemisch vorzulegen, bei der die zum Räuchern vorgesehenen Würste oder Wurstketten nicht mehr in einer Räucherkammer aufgehängt werden müssen und bei der sich während der Reifephase kein Öl- oder Fettaustritt zeigt. Dabei sollen die Vorteile von rauch- und wasserdampfdurchlässigen sowie -undurchlässigen Polymerhüllen kombiniert werden und somit für die Herstellung von Roh-, Brüh- und Kochwürsten geeignet sein.

Gelöst wurde diese Aufgabe durch eine rauch- und wasserdampfdurchlässige Nahrungsmittelhülle aus einem Gemisch auf Basis von Polyamid oder Copolyamid, dadurch gekennzeichnet, daß das Gemisch
a) mindestens ein aliphatisches Polyamid und/oderaliphatisches Copolyamid und
b) mindestens ein hydrophiles thermoplastifizierbares weiteres Polymer oder Copolymer umfaßt, das ein heterofunktionelles Polyamid, ein α-Olefin/Vinylacetat-Copolymer, ein partiell oder vollständig verseiftes Ethylen/Vinylacetat-Copolymer, ein partiell oder vollständig verseiftes Polyvinylacetat, ein Polyesterurethan, ein Polyetherurethan, ein Polyester-etherurethan, ein Polyvinylpyrrolidon oder ein Copolymer mit Vinylpyrrolidon-Einheiten und Einheiten von anderen α,β-olefinisch ungesättigten Monomeren, ein (Co)Polymer mit N-Vinyl-alkylamid-Einheiten oder ein (Co)Polymer mit Einheiten von α,β-ungesättigten Carbonsäuren oder α,β-ungesättigten Carbonsäureamiden ist,
und daß die Hülle auf der dem Nahrungsmittel zugewandten Seite mit Flüssigrauch imprägniert ist.

Die Hülle ist bevorzugt eine-schlauchförmige Hülle, besonders bevorzugt eine nahtlose schlauchförmige Hülle.

Die Hülle (vor der Imprägnierung mit dem Flüssigrauch) besteht aus einem Gemisch, das a) mindestens ein aliphatisches Polyamid und/oder aliphatisches Copolyamid (nachfolgend bezeichnet als aliphatisches (Co)Polyamid) sowie b) mindestens ein thermoplastifizierbares, anderes Polymer oder Copolymer umfaßt. Geeignete Polyamide bzw. Copolyamide sind Polycaprolactam (PA6), Polyhexamethylenadipamid (PA 6,6), Polyblend oder statistisches Copolyamid aus PA 6 und PA 66 (PA 6/6,6), PA 11, PA 12, Polytetramethylenadipamid (PA 4,6), PA 6,10, Copolyamide aus ε-caprolactam und ω-Laurinlactam (PA 6,12), Copolyamide aus PA 6 und PA 12 (PA 6/12). Das (Co)Polyamid bildet eine zusammenhängende (kohärente) Phase, d.h. eine Matrix. Die thermoplastifizierbaren weiteren (Co)Polymere bilden dann die disperse Phase.

Von den Polyamiden und Copolyamiden sind diejenigen besonders geeignet, die mindestens 3 %, bevorzugt mindestens 5 % ihres Gewichts an Wasser aufnehmen können. Der Anteil der Komponente a) beträgt allgemein 40 bis 90 Gew.-%, bevorzugt 45 bis 80 Gew.-%, besonders bevorzugt 50 bis 75 Gew.-%, jeweils bezogen auf das Gesamtgewicht des Gemisches.

Das thermoplastifizierbare weitere Polymer oder Copolymer ist bevorzugt ein heterofunktionelles Polyamid, insbesondere ein Polyetheramid, Polyesteramid, Polyetheresteramid oder Polyamidurethan. Die heterofunktionellen Polyamide sind allgemein Blockcopolyamide, die neben (Co-)Polyamidblöcken noch Polyetherblöcke, Polyesterblöcke und/oder Polyurethanblöcke aufweisen. Das weitere (Co-)Polymer kann weiterhin ein α-Olefin/Vinylacetat-Copolymer (das α-Olefin ist bevorzugt Ethylen, Propylen oder 1-Butylen; ein besonders bevorzugtes Copolymer ist ein Ethylenl/Vinylacetat-Copolymer), ein partiell oder vollständig verseiftes Ethylen/Vinylacetat-Copolymer (d.h. es kann auch ein EthylenVinylalkohol-Copolymer mit einem entsprechenden Verseifungsgrad sein), ein partiell oder vollständig verseiftes Polyvinylacetat, ein Polyesterurethan, ein Polyetherurethan, ein Polyester-ether-urethan, ein Polyalkylenglykol (insbesondere ein Polyethylenglykol, Polypropylenglykol oder ein Copolymer mit Polyethylen- und/oder Polypropylenglykol-Einheiten und Einheiten von anderen Monomeren), ein Polyvinylpyrrolidon oder ein Copolymer mit Vinylpyrrolidon-Einheiten und Einheiten von anderenα,β-olefinisch ungesättigten Monomeren, ein (Co)Polymer mit N-Vinyl-alkylamid-Einheiten (beispielsweise Poly(N-vinyl-formamid) oder Poly(N-vinyl-acetamid)) oder ein (Co)Polymer mit Einheiten von α,β-ungesättigten Carbonsäuren oderα,β-ungesättigten Carbonsäureamiden, insbesondere mit Einheiten von (Meth)acrylsäure und/oder (Meth)acrylamid, sein.

Die Komponente b) ist besonders bevorzugt ein wasserlösliches, organisches Polymer, das unter der Einwirkung von Wasser oder Wasserdampf quillt. Als "wassertöstich" werden im Zusammenhang mit der vorliegenden Erfindung Polymere bezeichnet, deren Löslichkeit in Wasser von 80°C mindestens 20 g/l beträgt. Polyvinylalkohol (PVAL) zählt zu diesen wasserlöslichen Polymeren. Besonders bevorzugt davon ist wiederum ein PVAL mit einem Molekulargewicht Mw von 10.000 bis 50.000 und einem Verseifungsgrad von 75 bis 98 %.

Der Anteil der Komponente b) beträgt allgemein 10 bis 60 Gew.-%, bevorzugt 20 bis 55 Gew.-%, besonders bevorzugt 25 bis 50 Gew.-%, jeweils bezogen auf das Gesamtgewicht des thermoplastischen Gemisches.

Das Gemisch kann darüber hinaus weitere organische oder anorganische Füllstoffe enthalten. Geeignete anorganische Füllstoffe sind beispielsweise Quarzpulver, Titandioxid, Talkum, Glimmer und andere Alumosilikate, Glasstapelfasern und andere Mineralfasern oder Mikroglaskugeln. Bevorzugte organische Füllstoffe sind Polysaccharide, insbesondere Stärke, Cellulose (insbesondere in Form von Cellulosepulver oder-kurzfasern), Exo-Polysaccharide (insbesondere Carageenan, Locust bean gum oder Guar gum) und Polysaccharid-Derivate (wie vernetzte Stärke, Stärkeester, Cellulose-ester oder -ether oder Carboxyalkylcelluloseether). Der Anteil des Füllstoffs beträgt allgemein nicht mehr als 40 Gew.-%, bevorzugt 1 bis 25 Gew.-%, besonders bevorzugt 2 bis 15 Gew.-%, jeweils bezogen auf das Gesamtgewicht des thermoplastischen Gemisches.

Schließlich kann das Gemisch noch übliche Additive, wie Farbstoffe oder Farbpigmente enthalten.

In einer besonderen Ausführungsform ist die Hülle mehrschichtig. Die innere, d.h. die Schicht, die mit dem Lebensmittel in Kontakt tritt, hat dabei die beschriebene Zusammensetzung. Die weiteren Schichten bestehen bevorzugt aus - in der Regel aliphatischen - Polyamiden (z.B. PA 6), gegebenenfalls abgemischt mit weiteren, entsprechend wasserdampfdurchlässigen Polymeren.

Die aus dem thermoplastischen Gemisch hergestellte Nahrungsmittelhülle kann eine Flach- oder Schlauchfolie sein. Sie ist allgemein einschichtig. Schlauchfolien, insbesondere nahtlose Schlauchfolien, sind dabei bevorzugt.

Die Wasserdampfdurchlässigkeit (WDD) - bestimmt gemäß DIN 53 122 - der erfindungsgemäßen ein- oder mehrschichtigen Hülle beträgt allgemein mindestens 30 g/m²·d, bevorzugt 60 bis 500 g/m²·d, besonders bevorzugt 80 bis 300 g/m²·d, bei einer einseitigen Beaufschlagung der Hülle mit Luft, die eine Temperatur von 23 °C und eine relative Luftfeuchte von 85 % aufweist.

Die erfindungsgemäße Hülle ist bevorzugt biaxial verstreckt und thermofixiert. Die Thermofixierung wird dabei vorteilhaft so durchgeführt, daß ein Restschrumpf verbleibt. Er bewirkt, daß die Hülle fest und faltenfrei am Füllgut anliegt, und zwar auch dann, wenn die Wurst gebrüht oder gekocht und anschließend wieder abgekühlt wurde. Der Restschrumpf beträgt in der Regel weniger als 20 % in Längs- und Querrichtung. Dabei wurde an einer Probe die Änderung in Länge und Breite nach 20 min Erwärmen in einem Wasserbad von 80 °C bestimmt. Geeignete rauch- und wasserdampfdurchlässige Hüllen, jedoch ohne Flüssigrauchimprägnierung, sowie Verfahren zu deren Herstellung sind den älteren, jedoch nicht vorveröffentlichten Anmeldungen DE 103 02 960 und DE 103 20 327 offenbart.

Die Imprägnierungslösung wird fein auf der Hüllenoberfläche verteilt, so daß sie zu einem wesentlichen Teil in die Hülle eindiffundiert und beim Lagern oder Reifen gleichmäßig an das in der Hülle befindliche Nahrungsmittel abgegeben werden kann. Die Imprägnierung erfolgt zweckmäßig durch Aufsprühen der Imprägnierungslösung während des Raffens der Hülle mit Hilfe eines Sprühdorns. Die Lösung ist allgemein eine wäßrige Lösung, sie enthält zweckmäßig jedoch noch Substanzen, die die Oberflächenspannung herabsetzen und so einen besonders gleichmäßigen Verlauf deraufgesprühten Lösung bewirken. Geeignet dafür sind beispielsweise Polyole, wie Ethylenglykol oder Propan-1,2-diol. Sie vermindern gleichzeitig die Wasseraktivität (d.h. den a_{w}-Wert) und wirken so gleichzeitig bakterizid oder zumindest bakteriostatisch und fungizid. Eine baktericide und fungicide Wirkung kann auch durch para-Hydroxy-benzoesäure-(C₁ - C₆)alkylester und deren Salze erzielt werden. Besonders zu nennen sind hier *para*-Hydroxy-benzoesäuremethylester-Na-salz und para-Hydroxy-benzoesäurepropylester-Na-salz sowie Gemische davon. Der Anteil an para-Hydroxybenzoesäurealkylester(n) und/oder deren Salzen beträgt allgemein etwa 0,5 bis 2,5 Gew.-% bevorzugt 0,8 bis 2,0 Gew.-%, jeweils bezogen auf das Gesamtgewicht der zum Imprägnieren eingesetzten Flüssigrauchlösung.

Der Flüssigrauch selbst kann ein saurer (insbesondere ein natürlicher), ein neutraler oder ein alkalisch gestellter Flüssigrauch sein. Gegebenenfalls sind ihm Teerbestandteile entzogen. Ein saurer Flüssigrauch ist allgemein bevorzugt, da er ein besonders intensives und typisches Räucheraroma und einen unverfälschten Räuchergeschmack bewirkt. Gegebenenfalls enthält der Flüssigrauch weitere Zusätze, insbesondere viskositätserhöhende Stoffe (wie Carboxymethylcellulose, CMC) und/oder Stoffe, die die Bräthaftung beeinflussen (wie Lecithin, Alginat oder Silikonöle).

Eine besonders geeignete Lösung besteht aus handelsüblichen Rauchkondensaten, z.B. aus 10 bis 80 Gew.-% ®Enviro 24 (von Red Arrow, Wisconsin, USA), 10 bis 30 Gew.-% 1,2 Propandiol und 0 bis 80 Gew.-% Wasser. Sie wird als Sprühlösung überdie lnnendornbesprühung einer Raffmaschine aufgebracht. Die Lösung dient gleichzeitig zum Vorwässern der Hülle und zum Übertrag des Raucharomas. Danach ist die Hülle ohne Lagerzeit/Wartezeit direkt nach dem Auftrag an der Raffmaschine einsatzfähig.
Gegenstand der vorliegenden Erfindung ist demgemäß auch eine erfindungsgemäße Hülle, die in geraffter Form vorliegt, d.h. als sogenannte Raffraupe. Für Transport oder Lagerung wird die Raffraupe zweckmäßig mit einerwasserdampfdichten Schutzhülle umgeben. In einer besonderen Ausführungsform wird die Hülle verkranzt, bevor sie mit der Flüssigrauch-Lösung imprägniert wird. Mit einem solchen Kranzdarm lassen sich beispielsweise ringförmige Würste herstellen.

Wurstketten oder die vereinzelten Würste können zur Abtrocknung und Reifung direkt in einem Auffangbehältnis abgelegt werden. Die erfindungsgemäße Hülle bietet also den besonderen Vorteil, daß Räucherfarbe und -aroma auch dann gleichmäßig übertragen werden, wenn die Würste nicht aufgehängt sind, sondern auf einer Unterlage liegen. Das Aufhängen der Würste bzw. Wurstketten bedeutet einen zusätzlichen Arbeitsschritt, der nur per Hand bewerkstelligt werden kann. Die Wursthersteller sind daher bemüht, diesen Verfahrensschritt zu vermeiden.

Gegenstand der Erfindung ist schließlich auch ein Verfahren zur Herstellung eines geräucherten Nahrungsmittels in einer wasserdampf- und rauchdurchlässigen, schlauchförmigen Hülle. Das Verfahren umfaßt die folgenden Schritte:
- Bereitstellen einer füllfertigen schlauchförmigen Hülle,
- Füllen der Hülle mit einem Nahrungsmittel, bevorzugt mit Wurstbrät, insbesondere mit Rohwurstbrät,
- Verschließen der Hülle, beispielsweise mit einem Metall- oder Kunststoff-Clip oder durch Garnabbindung und
- Lagern der gefüllten Hülle.

Das Verfahren ist dadurch gekennzeichnet, daß eine auf der Innenseite mit Flüssigrauch imprägnierte Hülle gemäß der vorliegenden Erfindung eingesetzt wird. Dadurch kann das Nahrungsmittel in vorteilhafter Weise in der Hülle abtrocknen und reifen. Räucherfarbe, -aroma und -geschmack werden gleichzeitig auf das Nahrungsmittel übertragen.

In dem erfindungsgemäßen Verfahren ist keine Räucherung in einer Räucherkammer oder eine zusätzliche Behandlung mit Kalt-, Warm- oder Heißrauch erforderlich. Falls gewünscht, ist das jedoch prinzipiell möglich.

Mit der erfindungsgemäßen Hülle können nicht nur geräucherte Würste, sondern auch geräucherter Käse hergestellt werden.

Die nachfolgenden Beispiele dienen zur Illustration der Erfindung. Prozente sind darin Gewichtsprozente, soweit nicht anders angegeben oder aus dem Zusammenhang ersichtlich. "Gt" steht für "Gewtchtsteil(e)". Die Bestimmung des Farbeindrucks erfolgte durch farbmetrische Messungen unter Zugrundelegung des CIE-L*, a*, b*-Farbraums. Die Helligkeits- und Farbwerte L*, a* und b* wurden wie folgt bestimmt:
- Meßgerät:: ChromaMeter CR 400 der Firma Minolta Co., Ltd., Japan
- Prinzip:: Farbraum nach CIE (Commission Internationale d'Eclairage)
- Normierung:: DIN 5033, Teil 3
- Beleuchtung:: D65 (Normallicht C mit UV-Anteil, dem Tageslicht entsprechend)
- Meßprinzip:: spektral
- Meßgeometrie:: 10 ° zur Hauptreflexionsachse (= "Normbeobachter")

Der Begriff "Wasseraktivität" (= a_{w}-Wert) entspricht anderen Bezeichnungen, wie Gleichgewichtsfeuchtigkeit, Wasserpotential usw. und wird als Verhältnis des vorliegenden Wasserdampfdrucks in einem Substrat (z.B. Fleisch) zum maximal möglichen Wasserdampfdruck bei der gleichen Temperatur ausgedrückt. Steht ein Substrat im hygroskopischen Gleichgewicht mit der umgebenden Luft, kann die Wasseraktivität auf die relative Luftfeuchte bezogen werden, wobei die Wasseraktivität 1/100 des Werts der relativen Luftfeuchte beträgt. Der a_{w}-Wert wurde in den nachfolgenden Beispielen durch einen mechanischen a _{w}-Wert-Messer der Lufft GmbH, Fellbach-Schmieden) bestimmt.

pH-Werte wurden ermittelt mit einem Meßgerät WTW 537 und einer Elektrode ®SentixSp (Einstich pH-Meßkette für Messung von Fleisch, Obst, Käse usw.) der Wissenschaftlich-Technischen Werkstätten GmbH & Co. KG, D-82362 Weilheim.

### Beispiel 1 (durchlässige Hülle) - nicht erfingdungsgemäß

Eine einschichtige, rauch- und wasserdampfdurchlässige, schlauchförmige Polymerhülle wurde mit Hilfe eines Einschnecken-Extruders und einer Ringdüse hergestellt aus einem Gemisch aus
- 68 %: Polyamid 6/12 (Verhältnis 80 : 20 Gt) mit einem Schmelzvolumenindex (MVI) von 50 ml/10 min (gemessen bei 275 °C unter 5 kg Last); ®Grilon CR9 HV der Ems-Chemie AG, Schweiz,
- 30 %: eines Compounds aus 20 Gt Polyethylenglykol mit einem mittleren Polymerisationsgrad von 300 (®Genapol PEG 300), 10 Gt Glycerin und 3 Gt Wasser und
- 2 %: eines Masterbatchs aus Calciumcarbonat und PA 6 (Gewichtsverhältnis 50 : 50 Gt; HT-MAB-PA9098 der Fa. Treffert).

Die Hülle wurde biaxial verstreckt und thermofixiert, wie in der DE 103 02 960, beschrieben. Die Hülle hatte danach eine Wandstärke von 25 µm.

Sie wurde dann auf einer Raffmaschine gerafft, wobei über den Raffdorn eine Lösung aus
30 % Wasser,
10 % 1,2 Propandiol und
60 % Flüssigrauch
aufgesprüht wurde. Die Besprühungsmenge wurde mit einem Rotameter auf 15 I/h eingestellt. Die Gewichtszunahme der Hülle betrug dabei etwa 25%. Die Hülle wurde unmittelbar danach mit Teewurstbrät, d.h. einem Rohwurstbrät, gefüllt. Bereits beim Füllprozeß wurden die Würste vereinzelt und direkt in einem Auffangbehältnis abgelegt. Nach einer Wartezeit von 48 Stunden unter kontrolliertem Klima von 85 bis 90 % r.F. und 22°C sank der pH-Wert des Wurstbräts von 5,8 auf 4,8 ab, die Wurst rötete um und der a_{w}- Wert sank von 0,98 auf 0,93. Die Wurst hatte sich in ihrer Konsistenz gefestigt. Die Wurstmasse war nach einer Reifezeit von 72 h gleichmäßig mit einer Rauchfarbe eingefärbt, das Raucharoma deutlich wahrnehmbar.

### Beispiel 2 (Veraleichsbeispiel: wasserdampfundurchlässige Hülle)

Eine einschichtige, für Rauch und Wasserdampf undurchlässige, schlauchförmige, biaxial verstreckte und thermofixierte Nahrungsmittelhülle, hergestellt aus einem Gemisch aus 79,6 % PA 6, 10 % Copolyamid PA 6I/6T, 10 % Ethylen/Methacrylsäure-Copolymer und 0,4 % Glimmer (wie im Beispiel 1 der EP 0 550 833 beschrieben), wurde zu einer Raupe gerafft. Die nicht weiter vorgewässerte Polymerhülle wurde wie in Beispiel 1 beschrieben mit Flüssigrauch imprägniert, wobei sie etwa 7% an Gewicht zunahm. Sie wurde dann wie beschrieben mit Teewurstbrät gefüllt. Nach einer Wartezeit von 48 h sank der pH Wert des Bräts von 5,8 auf 4,0, die Wurst rötete um, der a_{w}-Wert blieb stabil bei 0,98. Die Wurst konnte jedoch nicht ausreichend abtrocknen und reifen, so daß die Wurst nicht die gewünschte Konsistenz aufwies. Außerdem war der Farbübertrag sehr viel geringer, erkennbar an dem höheren L*-Wert.

### Beispiel 3 (Vergleichsbeispiel: Kalträucherung)

Eine Hülle gemäß Beispiel 1 wurde nur mit Wasser (d.h. nicht mit Flüssigrauch) besprüht und nahm dabei um ca. 25 % an Gewicht zu. Sie wurde mit Teewurstmasse befüllt und anschließend hängend einem Kaltrauchverfahren unterzogen, danach 48 h lang gelagert und noch etwa 18 h lang geräuchert. Der pH-Wert der Wurst von sank von 5,8 auf 4,5 ab. Die Wurst rötete um, und der a_{w}-Wert sank von 0,98 auf 0,92. Die Wurst hatte sich in ihrer Konsistenz gefestigt.

Rauchfarbe an der Wurstoberfläche wurde im Vergleich zum Kern der Wurst durch L*, a*, b*-Messung bestimmt. Säuregehalt und Rauchintensität im Vergleich mit einer herkömmlich hergestellten Wurst wurden sensorisch bewertet.

Das Ergebnis der Prüfungen ist in folgender Tabelle dargestellt:

| Beispiel | L*-Wert | | a*-Wert | | b*-Wert | | Geschmack |
|---|---|---|---|---|---|---|---|
| | Oberfläche | Kern | Oberfläche | Kern | Oberfläche | Kern | |
| 1 | 50,3 | 65,7 | 21,5 | 13,1 | 32,5 | 17,5 | sehr gut, typischer Räuchergeschmack |
| 2 | 62,6 | 66 | 14,2 | 12,6 | 21,2 | 15,8 | unbefriedigend |
| 3 | 52,5 | 66,2 | 20,4 | 14,3 | 36,8 | 17,1 | typischer Räuchergeschmack |

## Patentansprüche

1. Rauch- und wasserdampfdurchlässige Nahrungsmittelhülle aus einem Gemisch auf Basis von Polyamid oder Copolyamid, **dadurch gekennzeichnet, daß** das Gemisch
a) mindestens ein aliphatisches Polyamid und/oder aliphatisches Copolyamid und
b) mindestens ein hydrophiles thermoplastifizierbares weiteres Polymer oder Copolymer umfaßt, das ein heterofunktionelles Polyamid, ein α-Olefin/Vinylacetat-Copolymer, ein partiell oder vollständig verseiftes Ethylen/Vinylacetat-Copolymer, ein partiell oder vollständig verseiftes Polyvinylacetat, ein Polyesterurethan, ein Polyetherurethan, ein Polyester-etherurethan, ein Polyvinylpyrrolidon oder ein Copolymer mit Vinylpyrrolidon-Einheiten und Einheiten von anderen α,β-olefinisch ungesättigten Monomeren, ein (Co)Polymer mit N-Vinyl-alkylamid-Einheiten oder ein (Co)Polymer mit Einheiten von α,β-ungesättigten Carbonsäuren oder α,β-ungesättigten Carbonsäureamiden ist,
und daß die Hülle auf der dem Nahrungsmittel zugewandten Seite mit Flüssigrauch imprägniert ist.

2. Nahrungsmittelhülle gemäß Anspruch 1, **dadurch gekennzeichnet, daß** sie schlauchförmig ist, bevorzugt nahtlos.

3. Nahrungsmittelhülle gemäß Anspruch 1 oder 2, **dadurch gekennzeichnet, daß** das Polyamid oder Copolyamid Polycaprolactam (PA 6), Polyhexamethylenadipamid (PA 6,6), ein Polyblend oder statistisches Copolyamid aus PA 6 und PA 66 (PA 6/6,6), PA 11, PA 12, Polytetramethylenadipamid (PA 4,6), PA 6,10, ein Copolyamid aus ε-Caprolactam und ω-Laurinlactam (PA 6,12), ein Copolyamid aus PA 6 oder ein PA 12 (PA 6/12) ist.

4. Nahrungsmittelhülle gemäß Anspruch 1 oder 2, **dadurch gekennzeichnet, daß** das Polyamid oder Copolyamid darin eine zusammenhängende (kohärente) Phase bildet.

5. Nahrungsmittelhülle gemäß Anspruch 1 oder 2, **dadurch gekennzeichnet, daß** der Anteil der Komponente a) jeweils bezogen auf das Gesamtgewicht des Gemisches 40 bis 90 Gew.-%, bevorzugt 45 bis 80 Gew.-%, besonders bevorzugt 50 bis 75 Gew.-%, beträgt.

6. Nahrungsmittelhülle gemäß Anspruch 1 oder 2, **dadurch gekennzeichnet, daß** das hydrophile thermoplastifizierbare weitere Polymer oder Copolymer ein heterofunktionelles Polyamid, ausgewählt aus Polyetheramid, Polyesteramid, Polyetheresteramid oder Polyamidurethan, oder ein (Co)Polymer mit Einheiten von (Meth)acrylsäure und/oder (Meth)acrylamid ist.

7. Nahrungsmittelhülle gemäß Anspruch 1 oder 2, **dadurch gekennzeichnet, daß** die Komponente b) ein wasserlösliches, organisches Polymer ist, das unter der Einwirkung von Wasser oder Wasserdampf quillt.

8. Nahrungsmittelhülle gemäß Anspruch 1 oder 2, **dadurch gekennzeichnet, daß** der Anteil der Komponente b) jeweils bezogen auf das Gesamtgewicht des thermoplastischen Gemisches 10 bis 60 Gew.-%, bevorzugt 20 bis 55 Gew.-%, besonders bevorzugt 25 bis 50 Gew.-%, beträgt.

9. Nahrungsmittelhülle gemäß einem oder mehreren der Ansprüche 1 bis 8, **dadurch gekennzeichnet, daß** das thermoplastische Gemisch zusätzlich mindestens einen organischen oder anorganischen Füllstoff enthält.

10. Nahrungsmittelhülle gemäß Anspruch 9, **dadurch gekennzeichnet, daß** der anorganische Füllstoff aus Quarzpulver, Titandioxid, Talkum, Glimmer und anderen Alumosilikaten, Glasstapelfasern und andere Mineralfasern und/oder Mikroglaskugeln besteht.

11. Nahrungsmittelhülle gemäß Anspruch 9, **dadurch gekennzeichnet, daß** der organische Füllstoff ein Polysaccharid, bevorzugt Stärke, Cellulose, Exo-Polysaccharide und/oder ein Polysaccharid-Derivat, bevorzugt vernetzte Stärke, Stärkeester, Cellulose-ester oder -ether oder Carboxyalkylcelluloseether ist.

12. Nahrungsmittelhülle gemäß Anspruch 9, **dadurch gekennzeichnet, daß** der Anteil des Füllstoffs jeweils bezogen auf das Gesamtgewicht des thermoplastischen Gemisches nicht mehr als 40 Gew.-%, bevorzugt 1 bis 25 Gew.-%, besonders bevorzugt 2 bis 15 Gew.-%, beträgt.

13. Nahrungsmittelhülle gemäß einem oder mehreren der Ansprüche 1 bis 12, **dadurch gekennzeichnet, daß** ihre Wasserdampfdurchlässigkeit (WDD) - bestimmt gemäß DIN 53 122 - bei einer einseitigen Beaufschlagung der Hülle mit Luft von 23°C und einer relativen Luftfeuchte von 85 % mindestens 30 g/m²·d, bevorzugt 60 bis 500 g/m²·d, besonders bevorzugt 80 bis 300 g/m²·d, beträgt.

14. Nahrungsmittelhülle gemäß einem oder mehreren der Ansprüche 1 bis 13, **dadurch gekennzeichnet, daß** sie mehrschichtig ist.

15. Nahrungsmittelhülle gemäß einem oder mehreren der Ansprüche 1 bis 14, **dadurch gekennzeichnet, daß** sie biaxial verstreckt und thermofixiert ist.

16. Nahrungsmittelhülle gemäß einem oder mehreren der Ansprüche 1 bis 15, **dadurch gekennzeichnet, daß** der Flüssigrauch ein saurer, bevorzugt ein natürlicher, ein neutraler oder ein alkalisch gestellter Flüssigrauch ist.

17. Nahrungsmittelhülle gemäß einem oder mehreren der Ansprüche 1 bis 16, **dadurch gekennzeichnet, daß** sie in geraffter Form vorliegt.

18. Verfahren zur Herstellung eines geräucherten Nahrungsmittels in einer wasserdampf- und rauchdurchlässigen, schlauchförmigen Hülle mit den Schritten
- Bereitstellen einer füllfertigen, schlauchförmigen Hülle auf Basis von Polyamid,
- Füllen der Hülle mit einem Nahrungsmittel, bevorzugt mit Wurstbrät, insbesondere mit Rohwurstbrät,
- Verschließen der Hülle und
- Lagern der gefüllten Hülle,
**dadurch gekennzeichnet, daß** die Hülle auf Basis von Polyamid eine Hülle gemäß einem oder mehreren der Ansprüche 1 bis 16 ist.

19. Verwendung der Nahrungsmittelhülle gemäß einem oder mehreren der Ansprüche 1 bis 16 für geräucherte Wurstwaren oder Räucherkäse.

## Claims

1. A smoke- and water-vapor-permeable food casing made of a mixture based on polyamide or copolyamide, wherein the mixture comprises
a) at least one aliphatic polyamide and/or aliphatic copolyamide and
b) at least one hydrophilic, thermoplastic further polymer or copolymer, which is a heterofunctional polyamide, an α-olefin/vinyl acetate copolymer, a partially or completely saponified ethylene/vinyl acetate copolymer, a partially or completely saponified polyvinyl acetate, a polyesterurethane, a polyetherurethane, a polyester-etherurethane, a polyvinylpyrrolidone or a copolymer having vinylpyrrolidone units and units of other α,β-olefinically unsaturated monomers, a (co)polymer having N-vinylalkylamide units or a (co)polymer having units of α,β-unsaturated carboxylic acids or α,β-unsaturated carboxamides, and in that the casing is impregnated with liquid smoke on the food-facing side.

2. The food casing as claimed in claim 1, wherein it is tubular, preferably seamless.

3. The food casing as claimed in claim 1 or 2, wherein the polyamide or copolyamide is polycaprolactam (nylon 6), polyhexamethyleneadipamide (nylon 6,6), a polyblend or random copolyamide of nylon 6 and nylon 66 (nylon 6/6, 6), nylon 11, nylon 12, polytetramethyleneadipamide (nylon 4,6), nylon 6,10, a copolyamide of ε-caprolactam and ω-laurolactam (nylon 6,12), a copolyamide of nylon 6 or a nylon 12 (nylon 6/12).

4. The food casing as claimed in claim 1 or 2, wherein the polyamide or copolyamide forms therein a coherent phase.

5. The food casing as claimed in claim 1 or 2, wherein the fraction of the component a) in each case based on the total weight of the mixture is 40 to 90 % by weight, preferably 45 to 80 % by weight, particularly preferably 50 to 75 % by weight.

6. The food casing as claimed in claim 1 or 2, wherein the hydrophilic, thermoplastic further polymer or copolymer is a heterofunctional polyamide, chosen from polyetheramide, polyesteramide, polyetheresteramide or polyamidourethane, or a (co)polymer having units of (meth)acrylic acid and/or (meth)acrylamide.

7. The food casing as claimed in claim 1 or 2, wherein the component b) is a water-soluble organic polymer which swells under the action of water or water vapor.

8. The food casing as claimed in claim 1 or 2, wherein the fraction of the component b), in each case based on the total weight of the thermoplastic mixture, is 10 to 60 % by weight, preferably 20 to 55 % by weight, particularly preferably 25 to 50 % by weight.

9. The food casing as claimed in one or more of claims 1 to 8, wherein the thermoplastic mixture additionally contains at least one organic or inorganic filler.

10. The food casing as claimed in claim 9, wherein the inorganic filler consists of quartz powder, titanium dioxide, talcum, mica and other aluminosilicates, glass staple fibers and other mineral fibers and/or glass microspheres.

11. The food casing as claimed in claim 9, wherein the organic filler is a polysaccharide, preferably starch, cellulose, exo-polysaccharides and/or a polysaccharide derivative, preferably crosslinked starch, starch ester, cellulose ester or ether or carboxyalkylcellulose ether.

12. The food casing as claimed in claim 9, wherein the fraction of the filler, in each case based on the total weight of the thermoplastic mixture is not greater than 40% by weight, preferably 1 to 25 % by weight, particularly preferably 2 to 15 % by weight.

13. The food casing as claimed in one or more of claims 1 to 12, wherein its water vapor permeability (WVP), determined as specified in DIN 53 122, with air impinging the casing on a single side at 23 °C and at a relative humidity of 85 %, is at least 30 g/m²·d, preferably 60 to 500 g/m²·d, particularly preferably 80 to 300 g/m²·d.

14. The food casing as claimed in one or more of claims 1 to 13, wherein it is multilayered.

15. The food casing as claimed in one or more of claims 1 to 14, wherein it it biaxially stretched and heat set.

16. The food casing as claimed in one or more of claims 1 to 15, wherein the liquid smoke is an acidic liquid smoke, preferably a natural liquid smoke, a neutral liquid smoke, or a liquid smoke made alkaline.

17. The food casing as claimed in one or more of claims 1 to 16, wherein it is in shirred form.

18. A method for producing a smoked food in a water-vapor- and smoke-permeable tubular casing having the steps
- providing a ready-to-stuff tubular casing based on polyamide,
- stuffing the casing with a food, preferably sausage emulsion, in particular with raw sausage emulsion,
- closing the casing and
- storing the stuffed casing,
which comprises the polyamide-based casing being a casing as claimed in one or more of claims 1 to 16.

19. The use of the food casing as claimed in one or more of claims 1 to 16 for smoked sausage products or smoked cheese.

## Revendications

1. Enveloppe alimentaire perméable à la fumée et à la vapeur d'eau, constituée d'un mélange à base de polyamide ou de copolyamide, **caractérisée en ce que** le mélange comprend :
a) au moins un polyamide aliphatique et/ou un copolyamide aliphatique et
b) au moins un autre polymère ou copolymère thermoplastifiable hydrophile, qui est un polyamide hétérofonctionnel, un copolymère d'alpha-oléfine/acétate de vinyle, un copolymère d'éthylène/acétate de vinyle partiellement ou complètement saponifié, un poly(acétate de vinyle) partiellement ou complètement saponifié, un uréthane de polyester, un uréthane de polyéther, un uréthane de polyester-éther, une polyvinylpyrrolidone ou un copolymère avec des unités de vinylpyrrolidone et des unités d'autres monomères insaturés au plan α,β-oléfinique, un (co)polymère avec des unités de N-vinyl-alkylamide ou un (co)polymère avec des unités d'acides carboxyliques α,β-insaturés ou des amides d'acides carboxyliques α,β-insaturés et
l'enveloppe est imprégnée sur la face tournée vers le produit alimentaire par de la fumée liquide.

2. Enveloppe de produit alimentaire selon la revendication 1, **caractérisée en ce qu'**il est tubulaire, de préférence sans couture.

3. Enveloppe de produit alimentaire selon la revendication 1 ou la revendication 2, **caractérisée en ce que** le polyamide ou le copolyamide est un polycaprolactame (PA 6), un poly(adipamide d'hexaméthylène) (PA 6,6), un mélange multiple ou un copolyamide statistique formé de PA6 et de PA 66 (PA 6/6,6), un PA 11, un PA 12, un poly(adipamide de tétraméthylène) (PA 4,6), un PA 6,10, un copolyamide de ε-caprolactame et de ω-laurinlactame (PA 6,12), un copolyamide de PA 6 ou un PA 12 (PA 6/12).

4. Enveloppe de produit alimentaire selon la revendication 1 ou la revendication 2, **caractérisée en ce que** le polyamide ou le copolyamide y forme une phase dépendante (cohérente).

5. Enveloppe de produit alimentaire selon la revendication 1 ou la revendication 2, **caractérisée en ce que** la fraction du composant a) respectivement par rapport au poids total du mélange s'élève à 40 à 90 % en poids, de préférence à 45 à 80 % en poids, tout particulièrement à 50 à 75 % en poids.

6. Enveloppe de produit alimentaire selon la revendication 1 ou la revendication 2, **caractérisée en ce que** l'autre polymère ou copolymère thermoplastifiable hydrophile est un polyamide hétérofonctionnel choisi parmi un amide de polyéther, un amide de polyester, un amide de polyéther-ester ou un uréthane de polyamide ou un (co)polymère avec des unités d'acide (méth)acrylique et/ou de (méth)acrylamlide.

7. Enveloppe de produit alimentaire selon la revendication 1 ou la revendication 2, **caractérisée en ce que** le composant b) est un polymère organique hydrosoluble qui gonfle sous l'influence de l'eau ou de la vapeur d'eau.

8. Enveloppe de produit alimentaire selon la revendication 1 ou la revendication 2, **caractérisée en ce que** la fraction du composant b) respectivement par rapport au poids total du mélange thermoplastique s'élève à 10 à 60 % en poids, de préférence à 20 à 55 % en poids, tout particulièrement à 25 à 50 % en poids.

9. Enveloppe de produit alimentaire selon une ou plusieurs des revendications 1 à 8, **caractérisée en ce que** le mélange thermoplastique contient en outre au moins une charge organique ou inorganique.

10. Enveloppe de produit alimentaire selon la revendication 9, **caractérisée en ce que** la charge inorganique est formée de poudre de quartz, de dioxyde de titane, de talc, de mica et d'autres aluminosilicates, de fibres discontinues de verre et d'autres fibres minérales et/ou microbilles de verre.

11. Enveloppe de produit alimentaire selon la revendication 9, **caractérisée en ce que** la charge organique est un polysaccharide, de préférence de l'amidon, de la cellulose, des exo-polysaccharides et/ou un dérivé de polysaccharide, de préférence de l'amidon réticulé, de l'ester d'amidon, de l'ester ou de l'éther de cellulose ou encore de l'éther de carboxyalkylcellulose.

12. Enveloppe de produit alimentaire selon la revendication 9, **caractérisée en ce que** la fraction de la charge respectivement par rapport au poids total du mélange thermoplastique ne s'élève pas à plus de 40 % en poids, de préférence à 1 à 25 % en poids, tout particulièrement à 2 à 15% en poids.

13. Enveloppe de produit alimentaire selon une ou plusieurs des revendications 1 à 12, **caractérisée en ce que** sa perméabilité à la vapeur d'eau (WDD)-déterminée selon la norme DIN 53 122 - s'élève à au moins 30 g/m²·d, de préférence à 60 à 500 g/m²·d, tout particulièrement à 80 à 300 g/m²·d par chargement unilatéral de l'enveloppe avec de l'air à 23 °C et une humidité relative de l'air de 85 %.

14. Enveloppe de produit alimentaire selon une ou plusieurs des revendications 1 à 13, **caractérisée en ce qu'**elle présente plusieurs couches.

15. Enveloppe de produit alimentaire selon une ou plusieurs des revendications 1 à 14, **caractérisée en ce qu'**elle s'étend et est thermofixée biaxialement.

16. Enveloppe de produit alimentaire selon une ou plusieurs des revendications 1 à 15, **caractérisée en ce que** la fumée liquide est une fumée liquide acide, de préférence une fumée liquide naturelle, une fumée liquide neutre ou une fumée liquide alcalinisée.

17. Enveloppe de produit alimentaire selon une ou plusieurs des revendications 1 à 16, **caractérisée en ce qu'**elle se présente sous une forme contractée.

18. Procédé de fabrication d'un produit alimentaire fumé dans une enveloppe tubulaire perméable à la vapeur d'eau et à la fumée avec les étapes consistant à :
- préparer une enveloppe tubulaire complètement finie à base de polyamide,
- remplir l'enveloppe par un produit alimentaire, de préférence de la chair à saucisse, en particulier de la chair à saucisse nature,
- fermer l'enveloppe et
- stocker l'enveloppe fermée,
**caractérisé en ce que** l'enveloppe à base de polyamide est une enveloppe selon une ou plusieurs des revendications 1 à 16.

19. Utilisation de l'enveloppe pour produit alimentaire selon une ou plusieurs des revendications 1 à 16 pour des saucisses fumées ou des fromages fumés.
